# EUROPÄISCHE PATENTSCHRIFT

(11) **EP 1 763 456 B1**
(45) Veröffentlichungstag und Bekanntmachung des Hinweises auf die Patenterteilung: **07.01.2009**
(21) Anmeldenummer: 05716907.0
(22) Anmeldetag: 04.03.2005
(51) Int. Cl.: B60R 21/01

(54) **VORRICHTUNG ZUR ERKENNUNG EINES EINBAUFEHLERS BEI GEGENÜBERLIEGENDEN SATELLITENSENSOREN IN EINEM FAHRZEUG**
DEVICE FOR IDENTIFYING A FAULTY MOUNTING OF OPPOSITE SATELLITE SENSORS IN A VEHICLE
DISPOSITIF POUR IDENTIFIER UNE ERREUR DE MONTAGE AU NIVEAU DE DETECTEURS SATELLITES OPPOSES, DANS UN VEHICULE

(30) Priorität: 19.05.2004 DE 102004024704
(43) Veröffentlichungstag der Anmeldung: 21.03.2007
(73) Patentinhaber: ROBERT BOSCH GMBH, 70442 Stuttgart (DE)
(72) Erfinder: FISLAGE, Markus, 71229 Leonberg (DE); KOLB, Christophe, 70839 Gerlingen (DE)
(86) Internationale Anmeldenummer: PCT/EP2005/050964
(87) Internationale Veröffentlichungsnummer: WO 2005/113297

(56) Entgegenhaltungen:
- DE-A1- 10 002 685
- DE-A1- 10 011 635
- DE-C1- 10 144 266
- US-A- 6 095 553

## Beschreibung

### Stand der Technik

Die Erfindung geht aus von einem Verfahren zur Erkennung eines Einbaufehlers bei gegenüberliegenden Satellitensensoren in einem Fahrzeug nach der Gattung des unabhängigen Patentanspruchs.

Aus DE 100 02 685 A1 ist es bereits bekannt, einen fehlerhaften Einbau von Sensiermitteln in einem Fahrzeug zu erkennen. Die Erkennung eines Einbaufehlers erfolgt durch Vergleich der jeweils in Gierwinkelgeschwindigkeitswerte umgerechneten Signale der Sensiermittel. Größere Abweichungen zwischen den Werten werden als Fehler interpretiert und auf einer Anzeigevorrichtung zur Anzeige gebracht.

### Vorteile der Erfindung

Das erfindungsgemäße Verfahren zur Erkennung eines Einbaufehlers bei gegenüberliegenden Satellitensensoren in einem Fahrzeug mit den Merkmalen des unabhängigen Patentanspruchs hat demgegenüber den Vorteil, dass nunmehr über den Vergleich eines Türkontaktsignals und eines Signals eines Satellitensensors ein Einbaufehler des Satellitensensors erkannt wird. Insbesondere bei gegenüberliegenden Satellitensensoren, die sich beispielsweise jeweils im Bereich der jeweiligen Türe des Fahrers und Beifahrers befinden, kann eine Vertauschung der Verkabelung vorkommen. Durch das erfindungsgemäße Verfahren ist es möglich, in einfacher Weise diesen Einbaufehler zu detektieren. Gibt nämlich bei einem Türkontaktsignal innerhalb einer vorgegebenen Zeit der gegenüberliegende Sensor ein Signal ab, dann ist klar, dass eine Vertauschung der Verkabelung der Sensoren und im Steuergerät vorliegt. Dies kann dann vorteilhafter Weise in einen Speicher geschrieben werden bzw. angezeigt werden.

### Zeichnung

Ausführungsbeispiele der Erfindung sind in der Zeichnung dargestellt und werden in der nachfolgenden Beschreibung näher erläutert.

Es zeigen:
- Figur 1: ein Blockschaltbild einer Vorrichtung und
- Figur 2: ein Flussdiagramm des erfindungsgemäßen Verfahrens.

### Beschreibung

Periphere Beschleunigungssensoren oder Satellitensensoren sind meist im Bereich der Türen eines Fahrzeugs eingebaut, um das Steuergerät zur Ansteuerung von Personenschutzmitteln zu unterstützen, einen Seitencrash zu erkennen oder in Kombination mit anderen Aufprallsensoren der Seitencrash zu plausibilisieren. Bei den Beschleunigungssensoren ist der Typ der Sensoren auf der Fahrerseite wie auch auf der Beifahrerseite gleich. Daher ist es für ein Steuergerät nicht möglich, zu unterscheiden, ob beispielsweise der Sensor für die Fahrertüre an dem Anschluss für die Beifahrertüre angeschlossen ist. Dies kann im schlimmsten Fall dazu führen, dass im Crashfall auf Grund eines Baufehlers der falsche Seitenairbag gezündet wird oder das Timing der Zündungen beider Airbags nicht optimal ist.

Erfindungsgemäß wird ein Verfahren zur Erkennung von Einbaufehlern von gegenüberliegenden Satellitensensoren vorgeschlagen, die eine Korrelation zwischen Signalen von Satellitensensoren und von Türkontaktsignalen dazu ausnutzt. Damit können dann seitenvertauschte Sensoren erkannt werden, wobei die Lösung auch rein in Software realisiert werden kann. Der Algorithmus dabei ist einfach, da nur eine einfache Korrelation von Grenzwertüberschreitungszeitpunkt zum Türschließzeitpunkt mit einem Zeitdelta durchgeführt werden muss. Das erfindungsgemäße Verfahren ist zuverlässig und auch leicht nachweisbar.

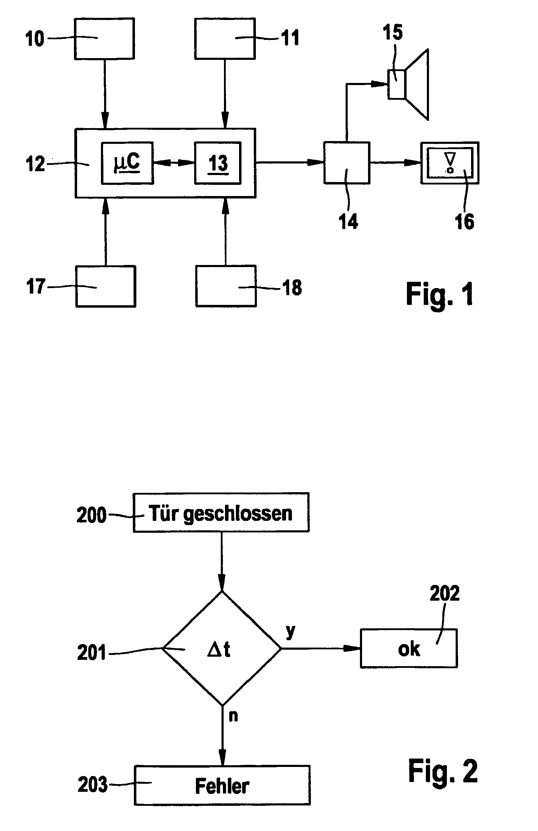

Figur 1 stellt in einem Blockschaltbild eine Vorrichtung zur Durchführung des erfindungsgemäßen Verfahrens dar. An ein Steuergerät 12 zur Ansteuerung von Personenschutzmitteln sind gegenüberliegende Satellitensensoren 10 und 17 angeschlossen. Darüber hinaus sind an das Steuergerät 12 Sensoren zur Überwachung der Türschließkontakte 11 und 18 vorgesehen. Die Signale dieser Sensoren werden im Steuergerät 12 von einem Prozessor µC ausgewertet. Dazu verwendet der Prozessor µC einen Speicher 13. Das Steuergerät 12 steuert neben den Personenschutzmitteln, die hier nicht dargestellt sind, auch einen Lautsprecher 15 und eine Anzeige 16 über eine Ansteuerung 14 an. Damit können Warnungen ausgegeben werden.

Erkennen die Türschließkontakte 11 bzw. 18, dass die Tür geschlossen wurde, also beispielsweise die Beifahrer- und Fahrertüre, dann werden die Türschließzeitpunkte verglichen mit den Signalen, die die Sensoren 10 und 17 abgeben. Auch diese Sensoren 10 und 17 müssen über die auftretende Beschleunigung bei der Türschließung die Türschließung selbst auch erkennen. Ist nun der Türschließzeitpunkt des Sensors 11 mit dem Signal des Sensors 17 korreliert, dann liegt ein Einbaufehler vor, denn der Anschluss des Sensors 17 an das Steuergerät 12 müsste an die Stelle treten, an die der Sensor 10 angeschlossen ist, der ebenfalls damit falsch angeschlossen ist. Ist jedoch das Türschließkontaktsignal des Sensors 11 mit dem Signal des Satellitensensors 10 korreliert, dann liegt ein richtiger Einbau der Sensoren vor. Sollte jedoch überhaupt kein Signal auftreten, weder vom Sensor 10 noch vom Sensor 17, dann liegen auch Sensorfehler vor, die mit der erfindungsgemäßen Einrichtung damit auch erkannt werden können. Werkseitig können die Signale, die beim Türschließen auftreten, gemessen werden, um eine entsprechende Schwelle im Prozessor µC vorzusehen, damit diese Türschließsignale, die durch die Sensoren 10 und 17 erkannt werden, auch leicht identifiziert werden können.

Figur 2 zeigt in einem Flussdiagramm das erfindungsgemäße Verfahren, das auf der Vorrichtung abläuft. In Verfahrensschritt 200 wird mit den Türkontaktsensoren 11 bzw. 18 festgestellt, dass die Tür geschlossen wird. Hierfür kann nun eine Zeitmarke gesetzt werden. Im Verfahrensschritt 201 wird überprüft, ob innerhalb einer bestimmten Zeit ΔT der Beschleunigungssensor 10 oder 17, der laut Anschluss an das Steuergerät 12 in der Nähe oder in der Tür, für die der Türkontaktsensor 11 steht, ebenfalls ein Beschleunigungssignal aufnimmt, das das Schließen der Tür repräsentiert. Ist das der Fall, dann wird in Verfahrensschritt 202 festgestellt, dass ein korrekter Einbau vorliegt. Das erfindungsgemäße Verfahren braucht dann nicht mehr durchgeführt werden, es sei denn, es wird für die Überprüfung der Funktionsfähigkeit der Beschleunigungssensoren an sich verwendet Reagieren nämlich die Beschleunigungssensoren überhaupt nicht auf das Schließen der Türe, dann ist es sehr wahrscheinlich, dass die Beschleunigungssensoren an sich defekt sind. Wurde jedoch in Verfahrensschritt 201 festgestellt, dass nicht der der gemäß Anschluss an das Steuergerät 12 dem Türkontakt 11 zugeordnete Beschleunigungssensor 10 ein Beschleunigungssignal liefert, das dem Schließen der Türe entspricht, sondern der Beschleunigungssensor 17, also der gerade bei der gegenüberliegenden Seite vorliegen soll und damit nicht das entsprechende Signal liefern kann, dann wird darauf geschlossen, dass ein Fehler vorliegt, und zwar im Verfahrensschritt 203. Damit liegt ein Einbaufehler vor, der werkstattseitig behoben werden muss. Dies wird dann entweder akustisch und/oder optisch mit dem Lautsprecher 15 bzw. der Anzeige 16 dargestellt. Dazu wird der Lautsprecher 15 mit einem Audioverstärker 14 angesteuert bzw. die Anzeige 16 mit der Ansteuerelektronik 14. Kommt überhaupt kein Signal, wenn die Türe geschlossen wurde, und wurde das in Verfahrensschritt 301 festgestellt, liegt ebenfalls ein Fehler vor, der entsprechend gekennzeichnet wird. Die Fehler werden im Speicher 13 von dem Mikroprozessor µC abgespeichert.

Hier ist dargestellt, dass durch das Steuergerät 12 zur Ansteuerung für Personenschutzmittel der Test der Beschleunigungssensoren 10 und 17 bezüglich ihrer Einbaulage durchgeführt wird. Es ist möglich, dass dieser Test durch andere Steuergeräte durchgeführt wird. Insbesondere kann vorgesehen sein, dass die Türkontaktsensoren 11 und 18 über einen CAN-Bus mit dem Steuergerät 12 verbunden sind. Das Steuergerät 12 weist dann einen entsprechenden CAN-Controller auf. Der Speicher 13 weist zumindest einen Teil seines Bereichs auf, der eine dauerhafte Speicherung von Daten aufweist, so dass solche Fehler, wie der Einbaufehler, dauerhaft abgespeichert werden können.

## Patentansprüche

1. Verfahren zur Erkennung eines Einbaufehlers bei gegenüberliegenden Satellitensensoren (10, 17) in einem Fahrzeug, wobei mittels eines Steuergeräts (12) der Einbaufehler anhand eines Signalvergleichs beim Schließen einer Seitentür zwischen einem Türkontaktsignal und einem Signal eines der Satellitensensoren (10, 17) erkannt wird, wobei das Türkontaktsignal durch einen jeweiligen Sensor zur Überwachung eines jeweiligen Türkschließkontakts (11, 18) erzeugt wird.

2. Verfahren nach Anspruch 1, **dadurch gekennzeichnet, dass** auf den Einbaufehler erkannt wird, wenn das Signal innerhalb einer vorgegebenen Zeit (ΔT) nach dem Türkontaktsignal nicht vorliegt.

3. Verfahren nach Anspruch 1 oder 2, **dadurch gekennzeichnet, dass,** nachdem der Einbaufehler erkannt wurde, der Einbaufehler in einen Speicher (13) eingetragen wird.

4. Verfahren nach einem der vorherigen Ansprüche, **dadurch gekennzeichnet, dass,** nachdem der Einbaufehler erkannt wurde, eine Warnung ausgegeben wird.

5. Verfahren nach einem der vorhergehenden Ansprüche, **dadurch gekennzeichnet, dass** auf den Einbaufehler erkannt wird, wenn das Türkontaktsignal und das Signal des der Tür gegenüberliegenden Satellitensensors innerhalb der vorgegebenen Zeit auftreten.

## Claims

1. Method for identifying an installation fault in satellite sensors (10, 17) located opposite one another in a vehicle, wherein a control device (12) is used to identify the installation fault by means of a signal comparison between a door contact signal and a signal of one of the satellite sensors (10, 17) when a side door closes, wherein the door contact signal is generated by a respective sensor for monitoring a respective door closing contact (11, 18).

2. Method according to Claim 1, **characterized in that** an installation fault is detected if the signal is not present within a predefined time (ΔT) after the door contact signal.

3. Method according to Claim 1 or 2, **characterized in that** after the installation fault has been identified, the installation fault is input into a memory (13).

4. Method according to one of the preceding claims, **characterized in that** after the installation fault has been identified, a warning is issued.

5. Method according to one of the preceding claims, **characterized in that** an installation fault is identified if the door contact signal and the signal of the satellite sensor located opposite the door occur within the redefined time.

## Revendications

1. Procédé pour identifier une erreur de montage au niveau de détecteurs satellites opposés (10, 17) dans un véhicule, l'erreur de montage étant identifiée au moyen d'un appareil de commande (12) à l'aide d'une comparaison de signal lors de la fermeture d'une porte latérale entre un signal de contact de porte et un signal des détecteurs satellites (10, 17), le signal de contact de porte étant produit par un détecteur respectif pour contrôler un contact de fermeture de porte respectif (11, 18).

2. Procédé selon la revendication 1, **caractérisé en ce que** l'on identifie l'erreur de montage lorsque le signal ne se présente plus dans un intervalle de temps prédéterminé (ΔT) après le signal de contact de porte.

3. Procédé selon la revendication 1 ou 2, **caractérisé en ce qu'**après que l'on a identifié l'erreur dé montage, l'erreur de montage est enregistrée dans une mémoire (13).

4. Procédé selon l'une quelconque des revendications précédentes, **caractérisé en ce qu'**après que l'on a identifié l'erreur de montage, un avertissement est émis.

5. Procédé selon l'une quelconque des revendications précédentes, **caractérisé en ce que** l'on identifie l'erreur de montage lorsque le signal de contact de porte et le signal du détecteur satellite opposé à la porte se produisent dans ledit intervalle prédéterminé.
